# EUROPÄISCHE PATENTSCHRIFT

(11) **EP 0 441 241 B1**
(45) Veröffentlichungstag und Bekanntmachung des Hinweises auf die Patenterteilung: **17.11.1994**
(21) Anmeldenummer: 91101265.6
(22) Anmeldetag: 31.01.1991
(51) Int. Cl.: D06N 5/00, B32B 11/10, E04D 5/10, E04B 1/66, D06N 3/00

(54) **Selbstklebende bituminöse Dach- und Dichtungsbahn mit Abdeckfolie**
Self adhesive bituminous roofing and sealing membrane with a covering film
Feuille d'étanchéité et de toit bitumineuse et autocollante avec un film de recouvrement

(30) Priorität: 09.02.1990 DE 4003861
(43) Veröffentlichungstag der Anmeldung: 14.08.1991
(73) Patentinhaber: HOECHST AKTIENGESELLSCHAFT, 65926 Frankfurt am Main (DE)
(72) Erfinder: Wenz, Ute, W-6200 Wiesbaden (DE); Beer, Ekkehard, W-6208 Bad Schwalbach (DE)

(56) Entgegenhaltungen:
- DE-A- 3 602 629
- DE-U- 8 904 333
- GB-A- 1 336 707
- GB-A- 1 418 997

## Beschreibung

Die vorliegende Erfindung betrifft eine Dichtungsbahn umfassend eine gelege-, gewebe- oder vliesartige Trägerschicht, die beidseitig mit einer bituminösen Beschichtung überzogen ist, eine einseitig darauf angeordnete Kleberschicht und eine Abdeckfolie.

Übliche Dachdichtungsbahnen, die zur Abdeckung insbesondere von Flachdachkonstruktionen verwendet werden, bestehen aus einer Trägerschicht, die beidseitig mit einer bituminösen Beschichtung überzogen ist. Diese bituminösen Verbundbahnen werden oft auch als Dichtungsbahnen für unterirdische Baukonstruktionen wie z. B. Tunnels verwendet und enthalten im allgemeinen außerdem noch eine zusätzliche Folienlage aus Metall oder Kunststoff.

Als Trägerschichten bzw. Verfestigungseinlage für die bituminöse Dachdichtungsbahn werden gewebe- oder gelegeartige Flächengebilde wie Glasfasermatten oder ähnliches verwendet, insbesondere aber auch Wirrfaservliese aus Polymerenfasern oder -fäden, z. B. aus Polyestermaterial, die in geeigneter Weise verfestigt sind. Wirrfaservliese sind deshalb bevorzugt, weil sie im Vergleich zu Geweben gute elastische Eigenschaften aufweisen, die nicht richtungsgebunden sind.

Derartige Dachdichtungsbahnen werden in einfacher Weise dadurch hergestellt, daß das Trägermaterial, vorzugsweise ein Spinnvliesstoff, bei erhöhten Temperaturen durch ein Bitumenbad gezogen wird, wobei das Trägermaterial sowohl getränkt als auch beschichtet wird. Es entsteht so ein Mehrschichtgebilde, dessen innere Schicht das Trägermaterial bildet und dessen äußere Schichten aus Bitumen bzw. modifiziertem Bitumen bestehen. Derartige bekannte Dachdichtungsbahnen sind z. B. in der DE-PS 31 45 266 und der DE-OS 34 05 109 beschrieben.

Um die bituminösen Dachdichtungsbahnen zu Rollen aufwickeln zu können, insbesondere um die zu Rollen aufgewickelten bituminösen Bahnen wieder von der Rolle abziehen zu können, werden üblicherweise die von sich aus klebrigen bituminösen Oberflächen mit partikelförmigen anorganischen Materialien wie z. B. Talkum, Sand oder Schiefer bestreut. Diese Trennmedien haben aber den Nachteil, daß sie bei der Verlegung der Dachdichtungsbahn nach dem Schweißverfahren die feste Verbindung der Dachdichtungsbahn mit dem Dach sehr stark beeinträchtigen. Es kommt hierbei oftmals zu Blasenbildungen, die letztendlich zu Undichtigkeiten führen.

Zum Verlegen und Befestigen der bituminösen Dichtungsbahnen auf den abzudichtenden Flächen (Dächer, Kellerwände, Brückenkonstruktionen etc.) sind im wesentlichen zwei Verfahrensvarianten bekannt. Zum einen ist es möglich, nach dem Flammverfahren mit Hilfe offener Flammen die Dichtungsbahn beim Verlegen auf einer Oberfläche anzuschmelzen und die Dichtungsbahn mit dieser schmelzflüssigen Oberfläche mit dem Untergrund zu verbinden, zum anderen kann die Dichtungsbahn nach dem Gießverfahren mit Hilfe von über den Schmelzpunkt hinaus erhitztem Bitumen oder Teer auf dem Untergrund festgeklebt werden. Beide Verfahren sind in Firmendruckschriften der Firma Börner/Bad Hersfeld, Nürnberg und Dietzenbach beschrieben. In neuerer Zeit wird mitunter auch ein Kaltklebeverfahren angewandt.

Bei den Dichtungsbahnen, die nach dem Kaltklebeverfahren verlegt werden, setzt die vorliegende Erfindung ein. Üblicherweise werden als Kleberschichten druckempfindliche Kleberschichten auf Basis von Kautschuk oder künstlichen Butadienpolymeren eingesetzt. Derartige dauerhaft klebende Schichten haben aber zur Folge, daß eine Bahn, die einseitig mit einer solchen Kleberschicht überzogen und zu einer Rolle aufgewickelt ist, sich nicht mehr von der Rolle abziehen läßt, weil die Vorderseite dauerfest mit der Rückseite verklebt.

Man muß daher, um den geschilderten Nachteil zu beheben, auf der freien Oberfläche der Kleberschicht eine Abdeckfolie vorsehen, die vor dem Verlegen der Bahn auf dem Untergrund leicht wieder entfernt werden kann. Unter dem Begriff Abdeckfolie soll also im Rahmen der vorliegenden Erfindung eine Trennschicht verstanden werden, die auf der freien Oberfläche der Kleberschicht der bituminösen Dichtungsbahn aufgebracht wird und die bei der zu einer Rolle aufgewickelten Dichtungsbahn ein Verkleben der einzelnen Rollenlagen untereinander verhindert. Beim Abziehen der Dichtungsbahn von der Rolle verbleibt die Abdeckfolie als integraler Bestandteil auf der Seite der Dichtungsbahn, auf der sie ursprünglich aufgebracht war, wird aber vor dem bestimmungsgemäßen Verlegen der Dichtungsbahn auf dem abzudichtenden Untergrund von dieser entfernt.

Übliche Abdeckfolien bestehen aus silikonisiertem Kraftpapier oder aus silikonisierter Polyolefinfolie. Diese Abdeckfolien haben jedoch den Nachteil, daß sie beim Abziehen von der Kleberschicht leicht einreißen und daß ihre Weiterreißfestigkeit sehr unbefriedigend ist, was häufig zu äußerst unerwünschten Verzögerungen im Arbeitsablauf beim Verlegen der Dichtungsbahnen führt.

Die GB-A-1 418 997 beschreibt eine bituminöse Dachdichtungsbahn, welche eine bituminöse Basisschicht umfaßt, auf deren Oberfläche ein Bitumen-Compound aufgebracht ist, welches aus Bitumen und Gummi und/oder Harz besteht. Über die Compound-Bitumen-Schicht ist eine Abdeckfolie gelegt. Die Abdeckfolie besteht aus Cellulose, Polyvinylalkohol, Aluminiumfolie oder aus einer Folie oder aus einem Papier. Im Beispiel ist als Abdeckfolie ein Laminat aus Kraftpapier und Polyethylenfolie angegeben.

Die DE-U-8 904 333 beschreibt eine selbstklebende Dichtungsbahn auf Basis von Kautschuk-modifiziertem Bitumen mit einer Verstärkungseinlage. Die Dachbahn ist mit einer Folie abgedeckt, welche im Fall von Oberflächen mit kaltselbstklebenden Massen abziehbar ist. Die Folie ist beispielsweise ein silikonisiertes Papier.

Aufgabe der vorliegenden Erfindung war es, eine selbstklebende bituminöse Dichtungsbahn mit einer Abdeckfolie zu schaffen, die sich problemlos von der Rolle abziehen läßt und bei der sich die Abdeckfolie ebenso problemlos, ohne ein- oder weiterzureißen, beim Verlegen der Dichtungsbahn von der Kleberschicht abziehen läßt.

Gelöst wird diese Aufgabe durch eine Dichtungsbahn der eingangs genannten Gattung, deren kennzeichnendes Merkmal darin zu sehen ist, daß die Abdeckfolie wenigstens eine Schicht aus thermoplastischem Polymeren und wenigstens ein Gewebe oder ein Vlies aus hochreißfesten Kunststoffasern oder -fäden umfaßt, wobei die Abdeckfolie mit der freien Oberfläche der Schicht aus thermoplastischem Polymeren auf die Kleberschicht aufgelegt ist.

Als thermoplastische Polymere für die Abdeckfolie kommen verschiedene Polymere in Frage, z. B. kann übliches Polypropylen mit einem Schmelzpunkt im Bereich von 150 bis 170 °C verwendet werden. Es können auch Copolymere oder Mischungen von Propylen mit anderen Alpha-Olefinen, z. B. mit Ethylen, verwendet werden, wobei der überwiegende Anteil der Copolymeren oder Mischungen aus Propyleneinheiten aufgebaut sein soll. Es können aber auch andere Polymere wie z. B. Polyester, insbesondere Polyethylenterephthalat, Polybutylenterephthalat oder Copolyester mit Terephthalsäure- und Isophthalsäureeinheiten oder Gemische von diesen vorgesehen sein. Ferner kann das thermoplastische Polymere für die Abdeckfolie einen relativ hohen Anteil an Regenerat enthalten, insbesondere bis zu 70 Gew.-%. Unter Regenerat soll im Rahmen der vorliegenden Erfindung Folienverschnittmaterial zu verstehen sein, welches bei der Folienherstellung anfällt und welches in teilweise wiederverdichteter Form dem Herstellungsprozeß zurückgeführt wird.

Dem thermoplastischen Polymeren werden vorzugsweise zusätzlich übliche Gleitmittel, Antiadhäsiva, Antistatika, Antioxidantien und ähnliche Zuschlagstoffe in jeweils üblichen Mengen zugefügt. Als besonders günstig hat es sich im Rahmen der vorliegenden Erfindung erwiesen, wenn dem thermoplastischen Polymeren ein Polydialkylsiloxan, insbesondere ein Polydimethylsiloxan, in einer Menge von 0,5 bis 5 Gew.-%, vorzugsweise von 1 bis 3 Gew.-%, zugefügt wird.

Das thermoplastische Polymere wird zur Herstellung der Abdeckfolie in einem Extruder aufgeschmolzen, die Schmelze wird durch eine Düse gepreßt und abgeschreckt. Die abgeschreckte Schmelze wird dann zur noch besseren Verfestigung bevorzugt in zwei senkrecht zueinander verlaufenden Richtungen streckorientiert, insbesondere wird sie längs- und quergestreckt. An die Querstreckung kann sich zur Verbesserung der Dimensionsstabilität noch eine Hitzefixierung anschließen. Die Folie besitzt eine Dicke im Bereich von 4 bis 50 µm, bevorzugt im Bereich von 6 bis 20 µm.

Die biaxial streckorientierte Folie wird zur Herstellung der fertigen Abdeckfolie noch mit einem Gewebe oder einem Vlies aus einem hochreißfesten Kunststoff kaschiert. Derartige Kunststoffe sind insbesondere thermoplastische Polyester wie Polyethylenterephthalat oder die anderen bereits genannten Polyester. Das Gewebe oder Vlies besitzt vorzugsweise ein Flächengewicht von 10 bis 100 g/m², besonders bevorzugt von 30 bis 50 g/m². Zur Kaschierung wird zwischen die fertig hergestellte Folie aus thermoplastischem Polymeren und die ebenfalls fertig hergestellte Lage aus Gewebe oder Vlies ein Klebstoff eingebracht, und dann werden beide Lagen zusammen mit dem Klebstoff verpreßt.

Als Klebstoffe eignen sich normalerweise übliche wasser- oder lösemittelhaltige Kleber, in der Praxis werden aber Schmelzkleber oder Zweikomponentenkleber, z. B. auf Polyurethanbasis, bevorzugt.

Zur Herstellung der erfindungsgemäßen bituminösen Dichtungsbahn genügt es, die Abdeckfolie mit der freien Oberfläche der thermoplastischen Polymerfole, die bevorzugt das Polydialkylsiloxan enthält, auf die Kleberschicht der flachgelegten, beidseitig mit Bitumenschichten überzogenen Trägerschicht aufzulegen und das Laminat dann aufzuwickeln. Die Bahnen können auch über Rollen zusammengeführt werden.

In einer besonderen Ausführungsform der Erfindung ist die Dichtungsbahn auf der der Abdeckfolie gegenüberliegenden freien Oberfläche mit einer Schicht enthaltend partikelförmiges anorganisches Material, insbesondere Schiefer, bedeckt.

In einer weiteren bevorzugten Ausgestaltungsform der Erfindung besteht die Abdeckfolie aus einer zweischichtigen Folie aus thermoplastischem Polymeren, einer Klebstoffschicht und einem Gewebe oder einem Vlies. Die zweischichtige Folie aus thermoplastischem Polymeren setzt sich dabei aus einer Basisschicht und einer Deckschicht zusammen, wobei die Deckschicht dünner ist als die Basisschicht und wobei die Deckschicht Polydialkylsiloxan in der angegebenen Gewichtsmenge enthält, bezogen auf das Gewicht der Deckschicht. Derartige zweischichtige Folien werden üblicherweise nach dem Coextrusionsverfahren gemeinsam hergestellt. Diese Ausführungs-form bietet den Vorteil, daß die Kleberschicht, mit der das Gewebe oder das Vlies an der Folie aus thermoplastischem Polymeren verankert ist, bessere Haftung zeigt.

Die Erfindung soll im folgenden beispielhaft anhand einer Zeichnung näher erläutert werden.

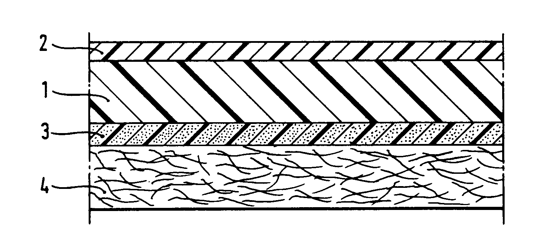

Die einzige Figur zeigt in seitlicher Ansicht einen senkrechten Schnitt durch eine Abdeckfolie für eine erfindungsgemäße Dichtungsbahn. Mit Bezugsziffern ist die zweischichtige biaxial streckorientierte Folie aus Polypropylen umfassend eine Basisschicht 1 und eine mit Polydimethylsiloxan modifizierte Deckschicht 2 hervorgehoben. Die Basisschicht 1 und die Deckschicht 2 sind nach dem Coextrusionsverfahren hergestellt und haften daher fest aneinander. Über eine Kleberschicht 3 ist ein Wirrfaservlies 4 aus Polyesterfasern mit der Basisschicht 1 verbunden.

## Patentansprüche

1. Selbstklebende, bituminöse Dichtungsbahn umfassend eine gelege-, gewebe- oder vliesartige Trägerschicht, die beidseitig mit einer bituminösen Beschichtung überzogen ist, eine einseitig darauf angeordnete Kleberschicht und eine Abdeckfolie, dadurch gekennzeichnet, daß die Abdeckfolie wenigstens eine Schicht aus thermoplastischem Polymeren und wenigstens ein Gewebe oder ein Vlies aus hochreißfesten Kunststoffasern oder -fäden umfaßt, wobei die Abdeckfolie mit der freien Oberfläche der Schicht aus thermoplastischem Polymeren auf die Kleberschicht aufgelegt ist.

2. Dichtungsbahn nach Anspruch 1, dadurch gekennzeichnet, daß als thermoplastische Polymere für die Abdeckfolie Polypropylen oder Polyester eingesetzt wird.

3. Dichtungsbahn nach Anspruch 1 oder 2, dadurch gekennzeichnet, daß das thermoplastische Polymere Polydialkylsiloxan, insbesondere Polydimethylsiloxan, in einer Menge von 0,5 bis 5 Gew.-%, vorzugsweise von 1 bis 3 Gew.-%, bezogen auf das Gewicht des thermoplastischen Polymeren, enthält.

4. Dichtungsbahn nach einem der Ansprüche 1 bis 3, dadurch gekennzeichnet, daß das thermoplastische Polymere eine biaxial streckorientierte und hitzefixierte Folie ist mit einer Dicke im Bereich von 4 bis 50 µm, bevorzugt im Bereich von 6 bis 20 µm.

5. Dichtungsbahn nach einem der Ansprüche 1 bis 4, dadurch gekennzeichnet, daß zwischen der Folie aus thermoplastischem Polymeren und der Lage aus Gewebe oder Vlies ein Klebstoff angeordnet ist.

6. Dichtungsbahn nach Anspruch 5, dadurch gekennzeichnet, daß der Klebstoff wasser- oder lösemittelhaltige Kleber, Schmelzkleber oder Zweikomponentenkleber enthält.

7. Dichtungsbahn nach einem der Ansprüche 1 bis 6, dadurch gekennzeichnet, daß die Lage aus Gewebe oder Vlies ein Flächengewicht im Bereich von 20 bis 100 g/m², vorzugsweise von 30 bis 50 g/m², besitzt.

8. Dichtungsbahn nach einem der Ansprüche 1 bis 7, dadurch gekennzeichnet, daß die Abdeckfolie eine zweischichtige Folie aus thermoplastischem Polymeren, eine Klebstoffschicht und ein Gewebe oder Vlies umfaßt, wobei die zweischichtige Folie aus thermoplastischem Polymeren aus einer Basisschicht und einer Deckschicht zusammengesetzt ist und wobei die Deckschicht dünner ist als die Basisschicht.

9. Dichtungsbahn nach Anspruch 8, dadurch gekennzeichnet, daß die Deckschicht Polydialkylsiloxan in einer Menge von 1 bis 3 Gew.-% enthält, bezogen auf das Gewicht der Deckschicht.

## Claims

1. Self-adhesive bituminous sealing web comprising a support layer in the form of a scrim, a woven fabric or a non-woven, both surfaces of which are covered with a bituminous coating, an adhesive layer disposed on one surface thereof and a cover sheet, wherein the cover sheet comprises at least one layer of a thermoplastic polymer and at least one woven fabric or non-woven made of highly tear-resistant plastic fibers or threads, and the cover sheet being connected with the adhesive layer in the way that its free thermoplastic polymer surface is placed onto the adhesive layer.

2. The sealing web as claimed in claim 1, wherein the thermoplastic polymer for use in the cover sheet comprises polypropylene or polyester.

3. The sealing web as claimed in claim 1 or 2, wherein the thermoplastic polymer contains a polydialkylsiloxane, in particular a polydimethylsiloxane, in an amount of 0.5 to 5 % by weight, preferably 1 to 3 % by weight, relative to the weight of the thermoplastic polymer.

4. The sealing web as claimed in any of claims 1 to 3, wherein the thermoplastic polymer is a biaxially stretch-oriented and heat-set film having a thickness in the range from 4 to 50 µm, preferably in the range from 6 to 20 µm.

5. A sealing web as claimed in any of claims 1 to 4, wherein an adhesive is disposed between the film of a thermoplastic polymer and the layer comprising a woven fabric or a non-woven.

6. The sealing web as claimed in claim 5, wherein the adhesive comprises water- or solvent-containing adhesives, thermoplastic adhesives or two-component adhesives.

7. The sealing web as claimed in any of claims 1 to 6, wherein the layer made of a woven fabric or a non-woven has a weight per unit area in the range from 20 to 100 g/m², preferably from 30 to 50 g/m².

8. The sealing web as claimed in any of claims 1 to 7, wherein the cover sheet comprises a two-layer film of a thermoplastic polymer, an adhesive layer and a woven fabric or non-woven, the two-layer film of a thermoplastic polymer being formed of a base layer and a top layer which is thinner than the base layer.

9. The sealing web as claimed in claim 8, wherein the top layer contains a polydialkylsiloxane in an amount of 1 to 3 % by weight, relative to the weight of the top layer.

## Revendications

1. Ruban d'étanchéité bitumineux autocollant comprenant: une couche support de type canevas, tissu tissé ou tissu non tissé, qui est enduite sur ses deux faces avec un revêtement bitumineux, une couche adhésive disposée sur l'une des faces et une feuille de couverture, caractérisé en ce que la feuille de couverture comprend au moins une couche en polymère thermoplastique et au moins un tissu tissé ou non tissé à base de fibres ou fils en matière plastique très résistante à la déchirure, la feuille de couverture étant placée de telle sorte que la surface libre de la couche en polymère thermoplastique est déposée sur la couche adhésive.

2. Ruban d'étanchéité selon la revendication 1, caractérisé en ce qu'on utilise, comme polymère thermoplastique pour la feuille de couverture, du polypropylène ou du polyester.

3. Ruban d'étanchéité selon la revendication 1 ou 2, caractérisé en ce que le polymère thermoplastique contient un polydialkylsiloxane, en particulier le polydiméthylsiloxane, à raison de 0,5 à 5 % en poids, de préférence de 1 à 3 % en poids, par rapport au poids du polymère thermoplastique.

4. Ruban d'étanchéité selon une quelconque des revendications 1 à 3, caractérisé en ce que le polymère thermoplastique est une feuille orientée par étirage biaxial et thermofixée, dont l'épaisseur est comprise entre 4 et 50 µm, de préférence entre 6 et 20 µm.

5. Ruban d'étanchéité selon une quelconque des revendications 1 à 4, caractérisé en ce que, entre la feuille en polymère thermoplastique et la couche de tissu tissé ou non tissé, est placé un adhésif.

6. Ruban d'étanchéité selon la revendication 5, caractérisé en ce que l'adhésif contient une colle hydrosoluble ou soluble dans un solvant, une colle thermofusible ou une colle à deux composants.

7. Ruban d'étanchéité selon une quelconque des revendications 1 à 6, caractérisé en ce que la couche en tissu tissé ou non tissé présente un poids surfacique compris entre 20 et 100 g/m², de préférence entre 30 et 50 g/m².

8. Ruban d'étanchéité selon une quelconque des revendications 1 à 7, caractérisé en ce que la feuille de couverture se compose d'une feuille bicouche en polymère thermoplastique, d'une couche adhésive et d'un tissu tissé ou non tissé, la feuille bicouche en polymère thermoplastique étant constituée d'une couche de base et d'une couche de couverture, la couche de couverture étant plus mince que la couche de base.

9. Ruban d'étanchéité selon la revendication 8, caractérisé en ce que la couche de couverture contient du polydialkylsiloxane dans la proportion de 1 à 3 % en poids par rapport au poids de la couche de couverture.
